(19) Europäisches Patentamt
European Patent Office
Office européen des brevets

(11) Veröffentlichungsnummer: **0 488 018 A2**

## (12) EUROPÄISCHE PATENTANMELDUNG

(21) Anmeldenummer: **91119696.2**

(51) Int. Cl.5: **B01D 69/08**, B01D 53/22

(22) Anmeldetag: **19.11.91**

(30) Priorität: **28.11.90 DE 4037818**

(43) Veröffentlichungstag der Anmeldung:
**03.06.92 Patentblatt 92/23**

(84) Benannte Vertragsstaaten:
**AT BE CH DE DK ES FR GB GR IT LI LU NL SE**

(71) Anmelder: **Akzo N.V.**
**Postbus 9300 Velperweg 76**
**NL-6800 SB Arnhem(NL)**

(72) Erfinder: **Sluma, Heinz-Dieter, Dr.**
**Kurmainzer Ring 11a**
**W-8754 Grossostheim(DE)**

(74) Vertreter: **Fett, Günter et al**
**Akzo Patente GmbH Kasinostrasse 19 - 23**
**W-5600 Wuppertal 1(DE)**

(54) **Kapillarmembran für die Gastrennung.**

(57) Die Erfindung betrifft ein Verfahren zur Herstellung einer Hohlkapillarmembran aus einem naßspinnbaren, synthetischen Polymeren durch Extrusion einer Spinnmasse durch eine Hohlfadendüse, wobei gleichzeitig durch eine zentrale Spinndüse eine hohlraumbildende fällende Flüssigkeit zugeführt wird, dadurch gekennzeichnet, daß das die Spinndüse verlassene Spinngebilde zunächst ein Gas durchläuft, bevor es in ein von außen wirkendes Fällbad eintritt, wobei die innen zugeführte fällende Flüssigkeit und das außen wirkende Fällbad jeweils ein Gemisch von Lösungsmittel und mit dem Lösungsmittel mischbare Nichtlösungsmittel sind und die Konzentrationen an Nichtlösungsmittel um wenigstens 10% differieren, und daß der das Fällbad verlassende Hohlfaden gewaschen, gegebenenfalls verstreckt und getrocknet und aufgewickelt wird. Die Erfindung betrifft auch nach dem Verfahren hergestellte Stützmembranen zur Beschichtung oder asymmetrische integrale Gastrennmembranen, die ohne weitere Beschichtung als Gastrennmembran einsetzbar sind.

EP 0 488 018 A2

Die Erfindung betrifft ein Verfahren zur Herstellung einer Hohlkapillarmembran aus einem naßspinnbaren, synthetischen Polymeren durch Extrusion einer Spinnmasse durch eine Hohlfadendüse, wobei gleichzeitig durch eine zentrale Spinndüse eine hohlraumbildende fällende Flüssigkeit zugeführt wird.

In der DE-OS 22 28 537 ist eine Hohlkapillarmembran beschrieben, die im Inneren eine Sperrschicht mit Mikroporen von 1 - 1000 nm hat und im übrigen eine Stützschicht mit einem offenporigen Gefüge bildet.

Die bekannte Membran weist eine Ultrafiltrationsrate von $10^{-6}$ bis $3 \cdot 10^{-5}$ cm$^3$/cm$^2 \cdot$ min $\cdot$ mm Hg auf und dient der Blutdialyse.

In der DE-OS 31 38 525 wird ein Verfahren zur Herstellung einer asymmetrischen Hohlfadenmembran aus Polyamid beschrieben, bei der die Kernflüssigkeit eine fällende Flüssigkeit ist, wobei zwischen Kernflüssigkeit und Fällbad eine pH-Differenz aufrechterhalten wird.

Aus der US-PS 3,674,628 ist eine Hohlfadenmembran für die Ultrafiltration, umgekehrte Osmose und die Gastrennung bekannt. Diese Membran weist eine Haut auf, in der der Durchmesser der Poren weniger als 500 Å betragen und die innen oder außen innerhalb einer Zone angeordnet sind.

Aufgabe der vorliegenden Erfindung war es, eine für den Einsatz in Gastrennmembranen geeignete Hohlkapillarmembran herzustellen, die zum einen für eine Beschichtung mit Polymeren zur Ausbildung von Selektivschichten geeignet ist und zum anderen aber bereits ohne weitere Beschichtung als integrale Gastrennmembran einsetzbar ist.

Gelöst wird diese Aufgabe durch ein Verfahren, das dadurch gekennzeichnet ist, daß das die Spinndüse verlassene Spinngebilde zunächst ein Gas durchläuft, bevor es in ein von außen wirkendes Fällbad eintritt, wobei das innen zugeführte fällende Fluid und das außen wirkende Fällbad jeweils ein Gemisch von Lösungsmittel und mit dem Lösungsmittel mischbare Nichtlösungsmittel sind und die Konzentrationen an Nichtlösungsmittel um wenigstens 10% differieren, und daß der das Fällbad verlassende Hohlfaden gewaschen, gegebenenfalls verstreckt und getrocknet und aufgewickelt wird.

Die erfindungsgemäß hergestellten Membranen lassen sich als asymmetrische Membranen einordnen. Asymmetrische Membranen als solche sind bekannt und können nach verschiedenen Methoden hergestellt werden. Beispielsweise kann die erzielte Auswahl von Fällbedingungen bereits zu nichtsymmetrischen Strukturen führen.

Schwieriger ist es, wenn die asymmetrische Struktur auf einer Seite eine dichte, porenfreie Haut aufweisen soll, wie bei Membranen für die Gastrennung oder Pervaporation. Zwar kann auch eine solche Schicht durch entsprechende Auswahl der Fällbedingungen erzielt werden, jedoch bedingen notwendige Unterschiede in den Löslichkeitsparametern von Lösungsmittel und Fällbad sowie der Verlauf der Fällung, daß sich unter der dichten Haut üblicherweise große Kavernen (Macrovoids) bilden. Macrovoids zeigen wiederum die Tendenz, aufgrund von Oberflächenspannungseffekten etc. durch die dichte Schicht durchzubrechen und damit unerwünschte Fehler in der dichten Haut zu erzeugen. Außerden verursachen bestimmte Fällbedingungen ein sehr langsames Ausfällen der Membran, so daß die Methode in einem kontinuierlichen Spinnprozeß an Grenzen stößt.

Eine bekannte und übliche Methode zu Herstellung asymmetrischer Membranen mit porenfreier Schicht ist die Zwischenschaltung eines Evaporationsschrittes zwischen Gießen und Ausfällen der Polymerlösung. Dazu wird z. B. ein Polymerfilm auf einer ebenen Fläche ausgestrichen und man läßt das Lösungsmittel teilweise eindampfen, ggf. in kontrollierter Atmosphäre.

Bei diesem Evaporationsschritt steigt an der Oberseite des Polymerfilms die Polymerkonzentration und die anschließende Fällung führt üblicherweise zu einer dichten Schicht auf einer porösen Unterstruktur. Auch hierbei erhält man häufig Macrovoids mit den bereits beschriebenen Nachteilen.

Zudem ist ein solches Verfahren bisher zwar bei Flachmembranen bekannt, da diese auf einer Trägerfolie gegossen werden können, ein entsprechendes Verfahren für Hohlfäden ist jedoch nicht möglich, da bei diesen nicht mit einem Trägermaterial gearbeitet werden kann.

Beim erfindungsgemäßen Verfahren wird zur Erzielung von dichten, porenfreien Schichten auf der Außenseite des Hohlfadens der größte Teil der Membranwand während des Spinnvorgangs von innen her gefällt, wobei der Faden ein Gas durchläuft.

Unter mittlerem Porendurchmesser soll im Sinne der Anmeldung der gemittelte Durchmesser der Wanddurchgänge verstanden werden. Da die hier in Frage kommenden Membranen eine Messung mittels des Blaspunktes nicht zulassen - es wird ein unzulässig hoher Druck erforderlich - wird der Porendurchmesser aus elektronenmikroskopischen Aufnahmen und Bildanalyse ermittelt.

Für das erfindungsgemäße Verfahren werden vorzugsweise als naßspinnbare synthetische Polymere Polyacrylnitril, Polysulfon, Polyvinylidendifluorid, Polyolefin, Polyimid, Polyamid, Polyester, Polyphenylenoxid eingesetzt.

Bevorzugt durchläuft das die Spinndüse verlassene Spinngebilde eine mit Gas beaufschlagte Kammer.

2

Das Gas in der mit Gas beaufschlagten Kammer kann beispielsweise getrockneter Stickstoff sein. Bei der Herstellung von Stützmembranen hat es sich jedoch als vorteilhaft erwiesen, wenn das Gas in der mit Gas beaufschlagten Kammer konditioniert ist.

Vorzugswiese beträgt die relative Feuchte des Gases 60 bis 90% bei Raumtemperatur.

Zur Erreichung einer hohen Fadengleichmäßigkeit hat es sich als günstig erweisen, wenn das Verfahren so durchgeführt wird, daß durch Leitorgane in der Kammer der Gasstrom zu einer gleichförmigen Umströmung des Spinngebildes geführt wird.

Wie bereits zuvor ausgeführt wurde, kommt es für die Ausbildung der Außenschicht sehr stark auf die Fällbedingungen an. Zur Einstellung eines mittleren Porendurchmessers zwischen 1 bis 200 nm an der Außenwand der Hohlkapillarmembran wird eine Konzentration an Lösungsmittel im äußeren Fällbad zwischen 30 und 85 Gew.-% gewählt.

Auch die zeitliche Differenz zwischen dem Einsetzen der Fällung im Inneren und an der Außenseite ist bedeutungsvoll. Sie wird dadurch beeinflußt, daß die Durchlauflänge in der mit Gas beaufschlagten Kammer zwischen 0,1 und 10 cm und die Spinngeschwindigkeit von 5 bis 100 m/min beträgt.

Man kennt Gastrennmembranen, bei denen eine poröse Trägerstruktur mit zwei oder mehr Polymeren beschichtet wird. Um für das Gesamtsystem einen optimalen Wirkungsgrad zu erreichen, muß auch die poröse Trägermembran ganz besondere Eigenschaften aufweisen. Eine solche Trägerschicht wird auch als Stützmembran bezeichnet.

Die spätere Gastrennembran soll eine möglichst hohe Permeanz aufweisen. Daher darf die Stützmembran keinen wesentlichen Flußwiderstand bieten. Deshalb muß die Wandstruktur dieser Forderung angepaßt werden. Die Stützmembran zeigt von innen nach außen eine sehr homogene Struktur, die erst in einer 0,5 bis 3 $\mu$m dicken Außenschicht in eine asymmetrische Struktur übergeht. In dieser Außenschicht nimmt die Porengröße dann sehr stark ab, und erreicht an der Außenoberfläche einen Porendurchmesser von ca. 0,01 bis 0,03 $\mu$m. Diese spezielle Struktur der Stützmembran garantiert einen hohen Gasfluß.

Für die Gesamtleistung der Gastrennmembranen ist die Oberflächenporosität der unbeschichteten Trägermembran wichtig. Diese Oberflächenporosität nimmt gewöhnlich mit dem Durchmesser der Oberflächenpore ab.

Für eine defektfreie, ultradünne Beschichtung ist eine enge Porengrößenverteilung der Oberflächenporen sehr wichtig: Treten aufgrund einer breiten Verteilung bei einer geringen mittleren Porengröße trotzdem sehr große Poren auf, so führt dies zu Defekten in der Beschichtung. Die erfindungsgemäß hergestellte Stützmembran für Gastrennmembranen zeichnet sich dadurch aus, daß mit Ausnahme einer 0,5 bis 3,0 $\mu$m dicken Außenschicht die Wand gleichmäßig verteilte Poren mit einem mittleren Porendurchmesser von 0,1 bis 20 $\mu$m und die Außenschicht gleichmäßige Poren mit einem mittleren Porendurchmesser von 5 bis 200 nm enthält.

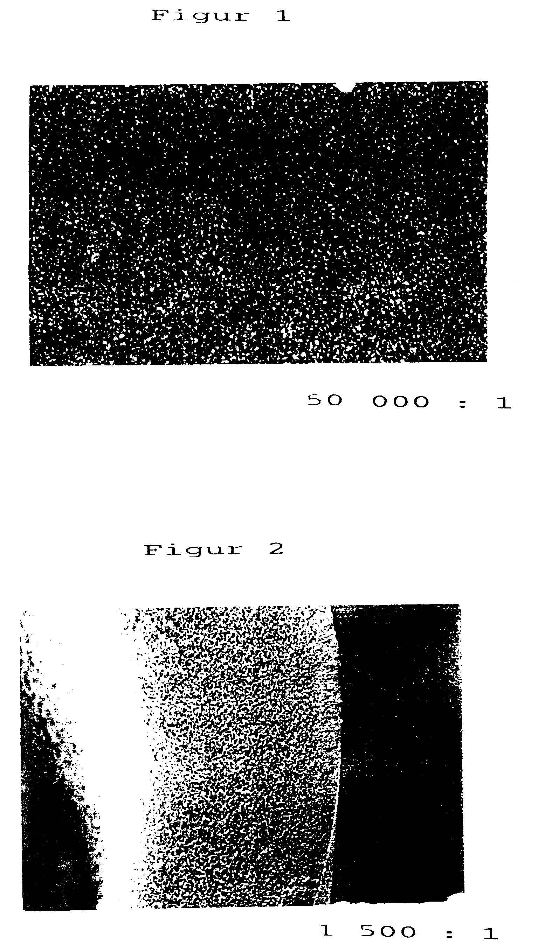

Erfindungsgemäße Stützmembranen sind in den Figuren 1 bis 2 dargestellt. Figur 1 zeigt die Oberfläche der Außen-Schicht im Maßstab 50 000 : 1 und Figur 2 einen Wandquerschnitt der Stützmembran im Maßstab 1 500 : 1.

Mit dem erfindungsgemäßen Verfahren lassen sich durch geringfügige Änderungen der Verfahrensbedingungen auch asymmetrische integrale Gastrennmembranen herstellen. Sie zeichnen sich dadurch aus, daß mit Ausnahme einer 50 bis 300 nm dicken Außenschicht die Wand gleichmäßig verteilte Poren mit einem mittleren Porendurchmesser von 0,1 bis 2 $\mu$m enthält und daß die Außenschicht porenfrei und dicht ist. Eine solche Membran kann, ohne daß die Notwendigkeit besteht, noch Beschichtungen aufzutragen, als Gastrennmembran eingesetzt werden.

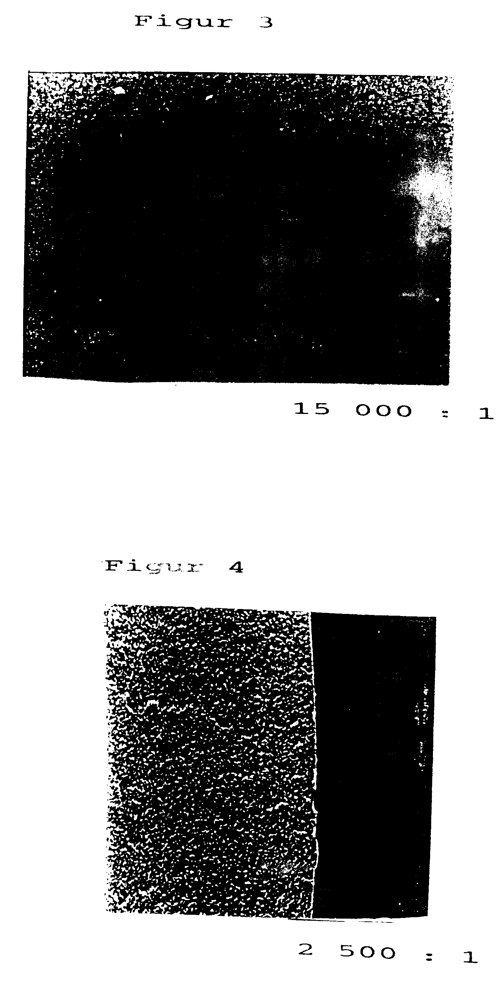

Figur 3 zeigt eine Abbildung eine Außenwand im Maßstab 15 000 : 1, wobei deutlich erkennbar ist, daß die Außenschicht porenfrei und dicht ist. In Figur 4 ist der Gesamtquerschnitt der Hohlfadenwand im Maßstab 2 500 : 1 dargestellt ist. Hier zeigt sich die gleichmäßige Porenverteilung in fast der ganzen Wand.

**Beispiel 1:**

Eine Polymerlösung bestehend aus 25 Gew.% Polyacrylnitril-Copolymer in einer Mischung aus 71 Teilen Dimethylsulfoxid (DMSO) und 4 Teilen Wasser wird bei 80°C durch eine Hohlfadendüse extrudiert. Als Kernflüssigkeit wird ein Gemisch von 80 Teilen DMSO und 20 Teilen Wasser verwendet. Das Spinngebilde durchläuft mit 13 m/min einen Gasraum von 1 cm Länge und taucht dann in ein von außen wirkendes Fällbad aus 20 Teilen DMSO und 80 Teilen Wasser bei 60°C ein. Der Hohlfaden wird mit Wasser extrahiert.

Die Permeanz des so hergestellten, porösen Hohlfadens beträgt 2900 .$10^{-12}$ m/Pa.s. Die Membran weist eine asymmetrische Struktur mit Porengrößen auf der Außenoberfläche kleiner als 0,1 $\mu$m auf. Der Hohlfaden besitzt im trockenen Zustand eine Reißfestigkeit von 60 cN, einen Berstdruck von über 25 bar

3

und einen Implosionsdruck von über 35 bar auf.

**Beispiel 2:**

Ein Hohlfaden nach Beispiel 1 wird hergestellt, wobei das Fällbad aus 50 Teilen DMSO und 50 Teilen Wasser besteht. Die Permeanz des so hergestellten, porösen Hohlfadens beträgt $1700.10^{-12}$ m/Pa.s. Der Hohlfaden besitzt im trockenen Zustand eine Reißfestigkeit von 70 cN, einen Berstdruck von über 27 bar und einen Implosionsdruck von über 40 bar auf.

**Beispiel 3** (nicht erfindungsgemäß):

In einem **nicht** erfindungsgemäßen Verfahren wird ein Hohlfaden nach Beispiel 1 hergestellt, wobei das Fällbad eine Zusammensetzung von 80 Teilen DMSO und 20 Teilen Wasser aufweist.

Die resultierende Hohlfadenmembran zeigte eine Stickstoff-Durchlässigkeit von $400.10^{-12}$ m/Pa.s. Die Struktur der Membran ist gleichmäßig bis zur Außenwand und weist in der Außenwandschicht Porengrößen von mehr als 200 nm auf.

Durch die Beispiele 1 - 3 konnte die Korrelation zwischen der Fällbadzusammensetzung und der Stickstoff-Durchlässigkeit gezeigt werden.

**Beispiel 4:**

Eine Polymerlösung bestehend aus 25 Gew.% Polyacrylnitril-Copolymer in einer Mischung aus 71 Teilen DMSO und 4 Teilen Wasser wird bei 80°C durch eine Hohlfadendüse extrudiert. Als Kernflüssigkeit wird ein Gemisch von 80 Teilen DMSO und 20 Teilen Wasser verwendet. Das Spinngebilde taucht mit mit 13 m/min in ein von außen wirkendes Fällbad aus 60 Teilen DMSO und 40 Teilen Wasser bei 60°C ein. Der Hohlfaden wird mit Wasser extrahiert.

Unter den genannten Bedingungen durchläuft das Spinngebilde zwischen Düse und Fällbad einen Gasraum unterschiedlicher Länge. Die Analyse der resultierenden Support-Membran zeigt, daß eine deutliche Abhängigkeit der Durchlässigkeit der Membran von der Länge des Gasraumes besteht.

| Länge des Gasraums [cm] | Durchlässigkeit der Support-Membran [$10^{-12}$ m/Pa.s] |
|---|---|
| 12,5 | 1470 |
| 8,7 | 1280 |
| 0,5 | 780 |

Die Ergebnisse demonstrieren die Bedeutung der zeitlichen Differenz zwischen der Fällung im Innern und an der Außenseite.

**Beispiel 5:**

Eine Polymerlösung bestehend aus 19.8 Gew.% eines kommerziellen Polyimids (MATRIMID) in einer Mischung aus 79,4 Teilen DMSO und 0,8 Teilen Wasser wird bei 50°C durch eine Hohlfadendüse extrudiert. Als Kernflüssigkeit wird ein Gemisch von 70 Teilen DMSO und 30 Teilen Glycerin verwendet. Das Spinngebilde taucht mit mit 9 m/min in eine von außen wirkendes Fällbad aus 50 Teilen DMSO und 50 Teilen Wasser bei 40°C ein. Der Hohlfaden wird mit wasser extrahiert.

Unter den genannten Bedingungen durchläuft das Spinngebilde zwischen Düse und Fällbad einen Gasraum unterschiedlicher Länge. Die Analyse der reultierenden Support-Membran zeigt, daß eine deutliche Abhängigkeit der Oberflächenstrukktur der Membran von der Länge des Gasraumes besteht:
- Durchläuft das Spinngebilde eine Luftstreccke von 10 cm, so dringt die Fällfront während des Durchlaufens der Luftstrecke von innen bis zur Außenseite des Spinngebildes vor und führt zu einer porösen Außenoberfläche (Bild).
- Beträgt die Luftstrecke 3 cm, so wird die äußere Schicht des Spinngebildes nicht im Gasraum von der inneren Fällfront erreicht, sondern die Struktur der äußeren Schicht wird durch das Fällbad bestimmt. Unter den genannten Spinnbedingungen erhält man dabei eine dichte, weitgehend porenfreie Außenoberfläche (Bild).

**Patentansprüche**

1. Verfahren zur Herstellung einer Hohlkapillarmembran aus einem naßspinnbaren, synthetischen Polymeren durch Extrusion einer Spinnmasse durch eine Hohlfadendüse, wobei gleichzeitig durch eine zentrale Spinndüse eine hohlraumbildende fällende Flüssigkeit zugeführt wird, dadurch gekennzeichnet, daß das die Spinndüse verlassene Spinngebilde zunächst ein Gas durchläuft, bevor es in ein von außen wirkendes Fällbad eintritt, wobei die innen zugeführte fällende Flüssigkeit und das außen wirkende Fällbad jeweils ein Gemisch von Lösungsmittel und mit dem Lösungsmittel mischbare Nichtlösungsmittel sind und die Konzentrationen an Nichtlösungsmittel um wenigstens 10% differieren, und daß der das Fällbad verlassene Hohlfaden gewaschen, gegebenenfalls verstreckt und getrocknet und aufgewickelt wird.

2. Verfahren nach Anspruch 1, dadurch gekennzeichnet, daß als naßspinnbare synthetische Polymere Polyacrylnitril, Polysulfon, Polyvinylidendifluorid, Polyolefin, Polyimid, Polyamid, Polyester, Polyphenylenoxid eingesetzt werden.

3. Verfahren nach Anspruch 1 oder 2, dadurch gekennzeichnet, daß das die Spinndüse verlassene Spinngebilde zunächst eine mit Gas beaufschlagte Kammer durchläuft, bevor es in ein von außen wirkendes Fällbad eintritt.

4. Verfahren nach einem oder mehreren der Ansprüche 3 bis 4, dadurch gekennzeichnet, daß das Gas in der mit Gas beaufschlagten Kammer konditioniert wird.

5. Verfahren nach Anspruch 4, dadurch gekennzeichnet, daß die relative Feuchte des Gases 60 bis 90% bei Raumtemperatur beträgt.

6. Verfahren nach einem oder mehreren der Ansprüche 1 bis 5, dadurch gekennzeichnet, daß durch Leitorgane in der Kammer der Gasstrom zu einer gleichförmigen Umströmung des Spinngebildes geführt wird.

7. Verfahren nach einem oder mehreren der Ansprüche 1 bis 6, dadurch gekennzeichnet, daß zur Einstellung eines mittleren Porendurchmessers zwischen 1 bis 200 nm an der Außenwand der Hohlkapillarmembran die Konzentration an Lösungsmittel im äußeren Fällbad zwischen 30 und 85 Gew.-% gewählt wird.

8. Verfahren nach Anspruch 1, dadurch gekennzeichnet, daß die Durchlauflänge in der Gasstrecke zwischen 0,1 und 10 cm und die Spinngeschwindigkeit 5 bis 100 m/min beträgt.

9. Stützmembran für Gastrennmembranen, hergestellt nach einem Verfahren gemäß der Ansprüche 1 bis 8, dadurch gekennzeichnet, daß mit Ausnahme einer 0,5 bis 3,0 μm dicken Außenschicht die Wand gleichmäßig verteilte Poren mit einem mittleren Porendurchmesser von 0,1 bis 20 μm und die Außenschicht gleichmäßige Poren mit einem mittleren Porendurchmesser von 5 bis 200 nm enthält.

10. Asymmetrische integrale Gastrennmembran, hergestellt nach einem oder mehreren der Ansprüche 1 bis 8, dadurch gekennzeichnet, daß mit Ausnahme einer 50 - 300 nm dicken Außenschicht die Wand gleichmäßig verteilte Poren mit einem mittleren Porendurchmesser von 0,1 bis 2 μm enthält und daß die Außenschicht porenfrei und dicht ist.

11. Asymmetrische integrale Gastrennmembran hergestellt nach einem oder mehreren der Ansprüche 1 bis 8, dadurch gekennzeichnet, daß die Membran eine Reißfestigkeit nach Trocknung bei 70°C/48 h von mehr als 0,3 N, einen Berstdruck von innen nach Außen von über 10 bar und einen Implosionsdruck von über 15 bar aufweist.

Figur 1

50 000 : 1

Figur 2

1 500 : 1

Figur 3

15 000 : 1

Figur 4

2 500 : 1